# EUROPÄISCHE PATENTSCHRIFT

(11) **EP 2 266 786 B1**
(45) Veröffentlichungstag und Bekanntmachung des Hinweises auf die Patenterteilung: **08.05.2013**
(21) Anmeldenummer: 09008204.1
(22) Anmeldetag: 23.06.2009
(51) Int. Cl.: B29C 70/50, B29C 43/24, B82B 3/00, B29C 70/58, C08J 5/00

(54) **Herstellung von Verbundwerkstoffen aus Nanokompositen**
Manufacturing composite materials from nano-composites
Fabrication de matières composites à partir de nano-composites

(43) Veröffentlichungstag der Anmeldung: 29.12.2010
(73) Patentinhaber: Helmholtz-Zentrum Geesthacht Zentrum für Material- und Küstenforschung GmbH, 21502 Geesthacht (DE)
(72) Erfinder: Loos, Marcio Rodrigo, 89223-100 Joinville/SC (BR); Abetz, Volker, 21335 Lüneburg (DE); Schulte, Karl, 21244 Buchholz i.d. Nordheide (DE)
(74) Vertreter: Grebner, Christian Georg Rudolf

(56) Entgegenhaltungen:
- EP-A1- 1 675 129
- EP-A1- 2 236 542
- WO-A1-02/00429
- US-B1- 6 218 000
- E. T. THOSTENSON, SAEED ZIAEE, TSU-WEI CHOU: "Processing and electrical properties of carbon nanotube / vinyl ester nanocomposites" Composites Science and Technology 2. Juli 2008 (2008-07-02), Seiten 801-804, XP002551433 Gefunden im Internet: URL:http://www.sciencedirect.com/science?_ ob=ArticleURL&_udi=B6TWT-4SWN0TM-2&_user=9 87766&_rdoc=1&_fmt=&_orig=search&_sort=d&_ docanchor=&view=c&_searchStrId=1055989139& _rerunOrigin=google&_acct=C000049880&_vers ion=1&_urlVersion=0&_userid=987766&md5=fac 6c0ca4bbcd4a5803648bc29e1cc34> [gefunden am 2009-10-20]
- WEI DE ZHANG, LU SHEN, IN YEE PHANG, TIANXI LIU: "Carbon Nanotubes Reinforced Nylon-6 Composite Prepared by Simple Melt-Compounding" MACROMOLECULES, 24. Dezember 2003 (2003-12-24), Seiten 256-259, XP002551434

## Beschreibung

Die Erfindung betrifft ein Verfahren zum Herstellen eines Verbundwerkstoffs, wobei der Verbundwerkstoff Nanokomposite auf Polymerbasis aufweist.

Nanostrukturierte Materialien auf Kohlenstoffbasis, beispielsweise einwandige Kohlenstoff-Nanoröhrchen (single-walled carbon nano tubes (SWCNT)), mehrwandige Kohlenstoff-Nanoröhrchen (multi-walled carbon nano tubes (MWCNT)), Kohlenstoff-Nanofasern (CNF) und Ruß bzw. Kohlenschwarz (carbon black (CB)), sind aufgrund ihrer Eigenschaften für eine große Vielfalt möglicher Anwendungsbereiche wie Nanokomposite, elektronische Vorrichtungen, Feldemissionsbildschirme und für die Speicherung von Wasserstoff sowie für weitere Bereiche der Werkstoffwissenschaft von Interesse. Als Verstärkungszusätze für Nanokomposite können sie Matrizen wie Polymere, Keramik und sogar niedrigschmelzende Metalle stärken.

In den letzten Jahren haben sich die meisten Forschungsarbeiten auf die Verbesserung der Entbehrlichkeit von Kohlenstoff-Nanoröhrchen (CNT), Kohlenstoff-Nanofasern (CNF), Fullerenen und Kohlenschwarz (carbon black (CB)) konzentriert. Verglichen mit diesen Kohlenstoffmaterialien ist das Rußnanopartikel ein verhältnismäßig leitfähiges Kohlenstoffmaterial, das aus 90 bis 99 % elementarem Kohlenstoff besteht und am leichtesten verfügbar ist und aufgrund seines niedrigen Preises in der Industrie vielfältig eingesetzt wird.

Materialien auf Kohlenstoffbasis liegen aufgrund von starken Wechselwirkungen für gewöhnlich als Agglomerate vor, was Schwierigkeiten bei ihrer homogenen Verteilung in einem Mehrstoffsystem mit sich bringt. Folglich konnten ihre herausragenden Eigenschaften, die sich auf der Nanoebene ergeben, nicht wirksam auf Matrixmaterialien übertragen werden.

Es wurden ferner Anstrengungen unternommen, über physikalische Verfahren mit Hilfe einer Ultraschallbehandlung (vgl. W. D. Zhang et al., Macromolecules 2004, 37, 256; T. Liu et al., Macromolecules 2004, 37, 7214; R. Andrews et al., Appl. Phys. Lett. 1999, 75, 1329), mit chemischen Verfahren unter Verwendung starker Säuren wie Schwefelsäure und Salpetersäure (vgl. Y.-P. Sun et al., Acc. Chem. Res. 2002, 35, 1096; L. Dai et al. Adv. Mater. 2001, 13, 899; Hirsch, Angew. Chem. Int. Ed. 2002, 41, 1853; S. BanerJee et al., Chem. Eur. J. 2Q03, 9, 1898), oder kombinierten Verfahren unter Einsatz der Ultraschallbehandlung in starken Säuren (vgl. S. Kumar et al., Macromolecules 2002, 35, 9039; J. Sandler et al., Polymer 1999, 40, 5967; T. Zhang et al., Carbon 2000, 38, 2055; W. Huang et al., Nano Lett. 2002, 2, 231) eine homogene Verteilung von Kohlenstoff-Füllstoffen in verschiedenen Matrixmaterialien zu erreichen.

Die gewünschten Materialeigenschaften eines Nanokomposits hängen insbesondere von der Stärke der konkreten Wechselwirkungen zwischen Füllstoffen und Matrixpolymeren ab. Die mechanischen Eigenschaften von CNT-Nanokompositen durch physikalisches Vermischen würden stark von der Homogenität der CNT und von starken Wechselwirkungen an den Grenzflächen abhängen. Dasselbe gilt auch für Füllstoffe auf Kohlenstoffbasis.

In vielen Fällen ergeben sich jedoch häufig strukturelle Schäden an den Füllstoffen in Anbetracht der aggressiven Reaktionsbedingungen wie Energie, Behandlungsdauer und Temperatur.

In EP-A-1 675 129 ist ein elektrisch leitfähiges Material auf der Basls eines Fluorpolymers, Insbesondere Polytetrafluorethylens (PTFE) offenbart, wobei das Material einen leitfähigen Füllstoff auf Basis von Kohlenstoff enthält. Ferner ist in diesem Dokument ein Verfahren zum Herstellen eines leitfähigen Materials auf Basis von fluoriertem Polymer, insbesondere von PTFE, in Form eines Bandes oder eines zylindrischen Rohres beschrieben.

Weiterhin offenbart WO-A-02/00429 Faserverbunde mit einer hohen Dimensionsstabilität, Bewitterungsreslstenz und Flammfestigkeit, wobei die Faserverbunde eine Netzwerkstruktur aus Faserstoffen und/oder Holzpartikeln, hydrophobierten Melaminharzen sowie nicht hydrophobierten Melaminharzen und Füllstoffen aufweisen.

Außerdem ist in US-B-6 218 000 ein Verfahren zur Herstellung eines mikroporösen Polytetrafluorethylengegenstands offenbart, wobei durch Streckung eines Bands aus einer Mischung von PTFE Harz und Partikeln ein mikroporöser Film gebildet wird.

In EP-A-2 236 542 ist ferner die Herstellung von Polyazol-Kompositen aus Polyazol-Homopolymeren und/oder Polyazol-Copolymeren mittels einer Polykondensationsreaktion von A-A (Hydrazin und/oder dessen Derivate) Monomeren und B-B (Dicarbonsäure und/oder deren Derivate) Monomeren mit wenigstens einem Füllstoff offenbart.

Ausgehend von diesem Stand der Technik besteht die Aufgabe der vorliegenden Erfindung darin, auf einfache Weise Nanokomposit-Verbundwerkstoff herstellen, wobei die Nanokomposite im Verbundwerkstoff homogen verteilt sein sollen und der apparative Aufwand möglichst gering gehalten werden soll.

Die Aufgabe wird gelöst durch ein Verfahren zum Herstellen eines Verbundwerkstoffs, wobei der Verbundwerkstoff Nanokomposite auf Polymerbasis aufweist, mit den folgenden Verfahrensschritten:
a.) Bereitstellen einer Ausgangsmischung aus wenigstens einem Polymer und wenigstens einem Füllstoff, insbesondere wenigstens einem nanoskopischen Füllstoff, wobei
   i.) die Ausgangsmischung durch Mischung von wenigstens einem in einem Polymerlösungsmittel gelösten Polymer und von wenigstens einen in einem Füllstofflösungsmittel gelösten Füllstoff als Edukte bereitgestellt wird, wobei der Mischungsvorgang durch Rühren und/oder durch Ultraschallbeaufschlagung erfolgt, so dass als Ausgangsmischung eine in einer Flüssigkeit gelöste Ausgangsmischung bereitgestellt wird, oder
   iii.) die Ausgangsmischung durch Mischung von einem wenigstens festen Polymer und wenigstens einem festen Füllstoff als trockene Ausgangsmischung bereitgestellt wird, wobei der Mischungsvorgang durch Rühren und/oder durch Ultraschallbeaufschlagung und/oder unter Verwendung von einer Mahlvorrichtung erfolgt, so dass als Ausgangsmischung eine trockene Ausgangsmischung bereitgestellt wird,
b.) Zuführen der Ausgangsmischung aus Verfahrenschritt a.) zu einem Kalander, so dass die Ausgangsmischung durch den Kalander verarbeitet und/oder kalandriert wird und ein Zwischenprodukt mit einer Polymermatrix mit darin homogen verteilten Füllstoff, vorzugsweise nanoskopischen Füllstoff, gewonnen wird, und
c.) Verarbeiten des Zwischenprodukts aus Verfahrensschritt b.) unter Verwendung eines Gießverfahrens von Lösungen und/oder unter Verwendung eines Formverfahrens und/oder unter Verwendung eines Extrusionsverfahrens und/oder unter Verwendung eines Spinnverfahrens zu einem Verbundwerkstoff.

Die Erfindung beruht auf dem Gedanken, dass durch die Kalandrierbewegung mittels eines Kalanders eine Ausgangsmischung, die sowohl wenigstens ein Polymer als auch wenigstens einen nanoskospischen Füllstoff aufweist, ein weiterzuverarbeitendes Polymermischprodukt entsteht, wobei im Polymermischprodukt die nanoskopischen Füllstoffe homogen verteilt sind. Hierbei besteht beispielsweise ein erfindungsgemäß eingesetzter Kalander aus wenigstens zwei oder mehreren, insbesondere heizbaren, Walzen, die parallel angeordnet sind und gegensinnig laufen. Im anschließenden Weiterverarbeitungsverfahren wird aus dem Polymermischprodukt der erfindungsgemäße Verbundwerkstoff hergestellt, wobei in eine Polymermatrix die nanoskopischen Füllstoffen bzw. Nanoteilchen eingebettet sind.

Typischerweise sind die nanoskopischen Füllstoffe kleiner als in herkömmlichen Verbundwerkstoffen mit entsprechenden Verstärkungen, wobei die funktionellen Eigenschaften des erfindungsgemäßen Verbundwerkstoffes durch entsprechende nanoskalige Füllstoffe angepasst werden. Hierdurch ergeben sich bessere chemische und/oder mechanische Eigenschaften des erfindungsgemäß hergestellten Verbundwerkstoffes. Beispielsweise wird durch die Verbindung von nanoskopischen Füllstofffen bzw. Nanofüllstoffen die Zähigkeit und Festigkeit eines Polymers gleichzeitig erhöht.

Im Rahmen der Erfindung wird unter dem Gießen von Lösungen allgemein ein Verfahren verstanden, bei dem eine Lösung aus einem Polymer in einem flüchtigen Lösungsmittel auf eine Fläche gegossen wird, mit anschließendem Abdampfen des Lösungsmittels, um eine dünne Folie aus dem Polymer zu erhalten.

Im Rahmen der Erfindung wird ferner unter dem Gießen von Lösungen allgemein ein Verfahren verstanden, bei dem das Beschicken eines Einschneckenextruders und/oder einer Doppelschneckenmaschine mit einem Polymermischprodukt aus dem Kalander erfolgt.

Im Rahmen der Erfindung wird außerdem unter Formverfahren allgemein ein Verfahren verstanden, bei dem ein Polymermischprodukt aus dem Kalander unter Verwendung des Formpressens und/oder Spritzgießens und/oder Warmpressens weiterverarbeitet wird.

Im Rahmen der Erfindung wird überdies unter Spinnverfahren allgemein ein Verfahren verstanden, das die Weiterverarbeitung des Polymermischprodukts bzw. Zwischenprodukt aus dem Kalander, unter Verwendung des Schmelzspinnens und/oder Nassspinnens und/oder Trockenspinnens und/oder Extrusionsspinnens und/oder Dispersionsspinnens umfasst.

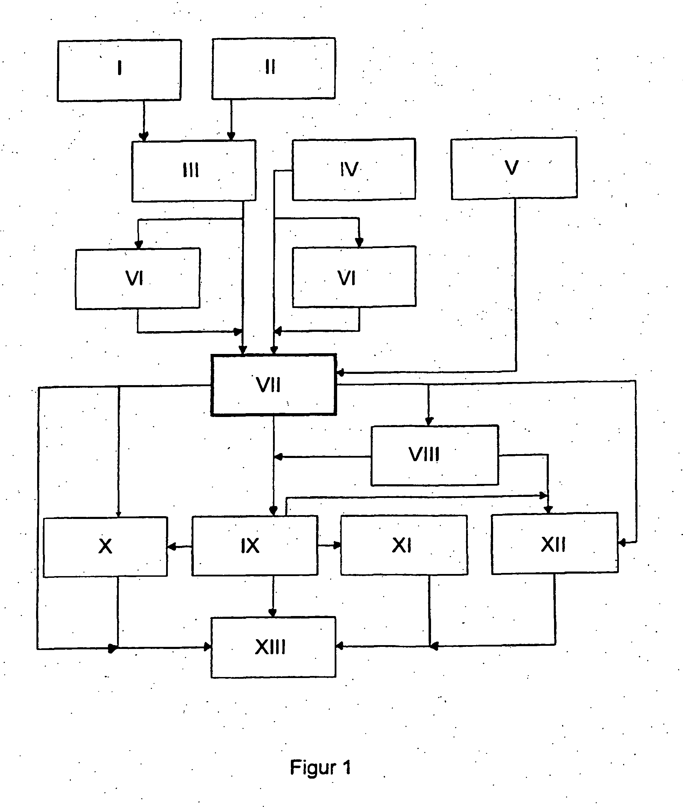

In Figur 1 sind mehrere unterschiedliche Kombinationen von Verfahrensschritten schematisch dargestellt, die in Abhängigkeit von den Eigenschaften des verwendeten Polymers ausgeführt werden können, um einen erfindungsgemäß hergestellten Verbundwerkstoff mit bzw. aus Nanokompositen bereitzustellen.

Die Ausgangsmischung für die Kalandrierbehandlung wird bereitgestellt durch
- Verfahrensschritt I: Herstellen oder Bereitstellen einer Polymerlösung, die wenigstens ein Polymer und eine Flüssigkeit aufweist, wobei insbesondere die Polymerlösung unter maschinellem Rühren und/oder Magnetrühren und/oder einer Ultraschallbehandlung hergestellt wird, und
- Verfahrensschritt II: Herstellen oder Bereitstellen einer Füllstoffmischung, die wenigsten einen Füllstoff und eine Flüssigkeit aufweist, wobei insbesondere die Füllstoffmischung unter maschinellem Rühren und/oder Magnetrühren und/oder einer Ultraschallbehandlung hergestellt wird, und
- Verfahrensschritt III: Zusammenbringen oder Mischen der Polymerlösung aus Verfahrensschritt I und der Füllstoffmischung aus Verfahrensschritt II zu einer Mischung, die insbesondere unter maschinellem Rühren und/oder Magnetrühren und/oder einer Ultraschallbehandlung erhalten wird,
- oder durch Verfahrensschritt IV: Herstellen einer direkten Polymer-Füllstoff-Mischung, die wenigstens einen Füllstoff, eine Flüssigkeit und ein Polymer aufweist, wobei insbesondere die Polymer-Füllstoff-Mischung unter maschinellem Rühren
und/oder Magnetrühren und/oder eine Ultraschallbehandlung bereitgestellt wird,
- und gegebenenfalls durch den optionalen Verfahrensschritt IV: Behandeln der Mischungen, die gemäß Verfahrensschritt III oder IV erhalten werden, durch Ultraschall,
- oder durch Verfahrensschritt V: Bereitstellen oder Herstellen einer, insbesondere trockenen, Polymer-Füllstoff-Mischung, die wenigstens ein Polymer und einen Füllstoff aufweist, ohne Flüssigkeit(en), wobei die Polymer-Füllstoff-Mischung unter Rühren und/oder einer Ultraschallbehandlung und/oder unter Verwendung eines Mahlgeräts bzw. einer Mühle durch Mahlen hergestellt wird.

Gemäß dem nachfolgenden Verfahrensschritt VII werden die bereitgestellten Zusammensetzungen, die in den Verfahrensschritten III und/oder IV und/oder V sowie gegebenenfalls VI erhalten werden, als Ausgangsmischungen einem Kalander (Verfahrensschritt VII) zugeführt, so dass die Ausgangsmischungen durch den Kalander weiterverarbeitet bzw. kalandriert werden, wodurch ein kalandriertes Zwischenprodukt mit einem darin homogen verteilten, nanoskopischen Füllstoff entsteht.

Anschließend werden nach Verfahrensschritt VII zur Weiterverarbeitung des kalandrierten Zwischenprodukts die folgenden Verfahrensschritte gegebenenfalls wahlweise ausgeführt:
- Verfahrensschritt VII: (erneutes) Lösen des kalandrierten Zwischenprodukts bzw. Polymermischprodukts, das in Verfahrensschritt VII erhalten wird, in einer Flüssigkeit, um eine Zwischenproduktlösung zu erhalten, oder
- Verfahrensschritt IX: Verarbeiten des kalandrierten Zwischenprodukts bzw. Polymermischprodukts, das gemäß den Verfahrensschritten VII und/oder VIII erhalten wird, unter Verwendung des Gießens von Lösungen.
- Verfahrensschritt X: Verarbeiten des kalandrierten Zwischenprodukts bzw. Polymermischprodukts, das in den Verfahrensschritten VII und/oder IX erhalten wird, unter Verwendung des Extrusionsverfahrens;
- Verfahrensschritt XI: Verarbeiten des kalandrierten Zwischenprodukts bzw. Polymermischprodukts, das im Verfahrensschritt IX erhalten wird, unter Verwendung des Formverfahrens;
- Verfahrensschritt XII: Verarbeiten des kalandrierten Zwischenprodukts bzw. Polymermischprodukts, das in den Verfahrensschritten VII und/oder VIII und/oder IX erhalten wird, unter Verwendung des Spinnverfahrens.

In den Verfahrensschritten I, II, III, IV, VIII und XII ist die Flüssigkeit ein polares Lösungsmittel und/oder ein unpolares Lösungsmittel und/oder Lösungsmittelsysteme wie hochkonzentrierte starke Säuren und/oder eine Mischung davon.

Die Verfahrensschritte I, II, III, IV und VIII werden vorzugsweise bei einer Temperatur von 1°C bis 300°C, insbesondere zwischen 10°C und 200°C und ganz besonders bevorzugt zwischen 20°C und 150°C durchgeführt.

In den Verfahrensschritten II, III, IV und V liegt die Füllstoffkonzentration zwischen 0 Gew.-% und 50 Gew.-%, insbesondere zwischen 0 Gew.-% und 20 Gew.-% und ganz besonders bevorzugt zwischen 0,0001 Gew.-% und 15 Gew.-%.

In den Verfahrensschritten II, III und IV wird der Verfahrensschritt der Ultraschallbehandlung der Mischung bei einer ausreichenden Schallenergie durchgeführt, um den Füllstoff in der Mischung zu verteilen.

Im Verfahrensschritt VII wird die Kalandrierbehandlung vorzugsweise bei einer Temperatur von 10°C bis 500°C, insbesondere zwischen 15°C und 400°C und ganz besonders bevorzugt zwischen 20°C und 350°C durchgeführt.

Im Verfahrensschritt VII wird ferner die Kalandrierbehandlung vorzugsweise in einem Zeitrahmen von 1 Sekunde bis 2 Stunden, insbesondere in einem Zeitrahmen von 5 Sekunden bis 1 Stunde und ganz besonders bevorzugt in einem Zeitrahmen von 5 Sekunden bis 30 Minuten durchgeführt.

Im Verfahrensschritt IX ist das Gießen von Lösungen als ein Verfahren zu verstehen, bei dem eine Lösung aus einem Polymer in einem flüchtigen Lösungsmittel auf eine Fläche gegossen wird, mit anschließendem Abdampfen des Lösungsmittels, um eine dünne Folie aus dem Polymer zu erhalten.

Im Verfahrensschritt X umfasst das Extrusionsverfahren das Beschicken eines Einschneckenextruders und/oder einer Doppelschneckenmaschine mit dem Polymermischprodukt, das in den Verfahrensschritten VII und/oder IX erhalten wird.

Im Verfahrensschritt XI umfasst das Formverfahren die Weiterverarbeitung des kalandrierten Zwischenprodukts bzw. Polymermischprodukts, das in Verfahrensschritt IX erhalten wird, unter Verwendung des Formpressens und/oder Spritzgießens und/oder Warmpressens.

Im Verfahrensschritt XII umfasst das Spinnverfahren die Weiterverarbeitung des Polymermischprodukts, das in den Verfahrensschritten VII, VIII und IX erhalten wird, unter Verwendung des Schmelzspinnens und/oder Nassspinnens und/oder Trockenspinnens und/oder Extrusionsspinnens und/oder Dispersionsspinnens.

Durch die Verarbeitung des Zwischenprodukts aus Verfahrensschritt b.) bzw. aus den Verfahrensschritten VIII, IX, X, XI und/oder XII (gemäß Figur 1) wird im Verfahrensschritt XIII (gemäß Figur 1) ein Verbundwerkstoff mit homogen verteilten Nanoteilchen bzw. nanoskopischen Füllstoffen erhalten, wobei in die Polymermatrix die nanoskopischen Füllstoffe bzw. Nanoteilchen eingebettet sind.

Im Rahmen der Erfindung werden unter einer Mischung eine Suspension und/oder eine kolloide Dispersion verstanden. Die Suspension ist eine heterogene Mischung, wenn sie nicht gleichmäßig in der Mischung verteilt ist. Die heterogenen Mischungen sind Mischungen mit einer uneinheitlichen Zusammensetzung. Die kolloiden Dispersionen bezeichnen homogene Mischungen, in denen die Teilchen von ein oder mehreren Bestandteilen mindestens eine Größe im Bereich von 1 nm (Nanometer) bis 1000 nm aufweisen, größer als die in einer Lösung, jedoch kleiner als die in einer Suspension.

Eine vorteilhafte Ausgestaltung des Verfahrens wird dadurch erreicht, dass die Ausgangsmischung vor dem Zuführen zum Kalander optional bzw. gegebenenfalls mit Ultraschall beaufschlagt wird. Durch die Kalandrierbehandlung der Ausgangsmischung wird erreicht, dass die nanoskopischen Füllstoffe bzw. Nanofüllstoffe gleichmäßig in dem Zwischenprodukt bzw. dem Polymermischprodukt in der Polymermatrix gleichmäßig dispergiert bzw. verteilt sind.

Das Rühren der Stoffe bzw. der Mischungen kann mit einer geeigneten mechanischen Rühreinrichtung, z. B. Magnetrührer oder dergleichen erfolgen.

Dazu ist weiter vorgesehen, dass als Polymerlösungsmittel oder als Füllstofflösungsmittel oder als Lösungsmittel ein polares Lösungsmittel oder ein unipolares Lösungsmittel oder Lösungsmittelsysteme in Form von Säuren, insbesondere starke Säuren, oder eine Mischung davon verwendet werden.

Außerdem erfolgt vorzugsweise die Bereitstellung der Ausgangsmischung bei einer Temperatur von 1°C bis 300°C, insbesondere zwischen 10°C und 200°C und ganz besonders bevorzugt zwischen 20°C und 150°C.

Ferner ist es günstig, wenn die Bereitstellung der Ausgangsmischung bei einer Temperatur von 1°C bis 300°C, insbesondere zwischen 10°C und 200°C oder insbesondere zwischen 20°C und 150°C, erfolgt.

Überdies zeichnet sich das Verfahren dadurch aus, dass die Konzentration des Füllstoffs in der Ausgangsmischung oder die Konzentration des Füllstoffs in dem Füllstofflösungsmittel oder die Konzentration des Füllstoffs in dem Lösungsmittel größer 0 Gew.-% (> Null) und kleiner/gleich (≤) 50 Gew.-%, insbesondere zwischen 0 Gew.-% und 20 Gew.-% oder zwischen 0,0001 Gew.-% und 15 Gew.-%, beträgt.

Weiterhin ist es in einer Ausgestaltung des Verfahrens bevorzugt, dass die Kalandrierbehandlung im Verfahrensschritt b.) bei einer Temperatur von 10°C bis 500°C, insbesondere zwischen 15°C und 400°C oder insbesondere zwischen 20°C und 350°C, durchgeführt wird und/oder dass die Kalandrierbehandlung in einem Zeitrahmen von 1 Sekunde bis 2 Stunden, insbesondere in einem Zeitrahmen von 5 Sekunden bis 1 Stunde oder insbesondere in einem Zeitrahmen von 5 Sekunden bis 30 Minuten, durchgeführt wird.

Insbesondere wird vorzugsweise nach Durchführung des Verfahrensschritt b.) das Zwischenprodukt vor seiner Weiterverarbeitung in einem Lösemittel gelöst wird, wobei insbesondere das erneute Lösen des Zwischenprodukts bei einer Temperatur von 1°C bis 300°C, insbesondere zwischen 10°C und 200°C oder insbesondere zwischen 20°C und 150°C, erfolgt, und/oder dass das Zwischenprodukt zur Durchführung des Spinnverfahrens in einem Lösemittel gelöst wird, wobei insbesondere als Lösemittel ein polares Lösungsmittel oder ein unpolares Lösungsmittel oder Lösungsmittelsysteme in Form von Säuren, insbesondere starke Säuren, oder eine Mischung davon verwendet.

Bevorzugterweise besteht der Füllstoff aus, insbesondere modifiziertem oder nicht modifiziertem, Ruß (CB) und/oder Kohlenstoff-Nanofasern und/oder Kohlenstoff-Nanoröhrchen und/oder Fullerene und/oder amorphem Kohlenstoff und/oder Zeolith und/oder Graphen und/oder Molekularsieb-Kohlenstoff und/oder Graphit und/oder pyrolysierten Polymerpartikeln und/oder Aluminiumoxid und/oder Zinkoxid und/oder Siliziumdioxid und/oder Silikaten und/oder Polymerfasern und/oder Glasfasern und/oder Calciumcarbonatpulvern und/oder Bariumsulfat und/oder Kaolin und/oder Titandioxid und/oder Eisenoxid und/oder organischen Harzen und/oder natürlichen mineralischen Füllstoffen und/oder synthetischen mineralischen Füllstoffen und/oder Tonen und/oder Aluminiumsilikat und/oder Hektorit und/oder Montmorillonit und/oder Bentonit und/oder Beidelit und/oder Saponit und/oder Stevensit und/oder Sauconit und/oder Nontronit und/oder Gold und/oder wasserhaltigen Metallhydroxiden und/oder Smektiten und/oder Vermiculiten und/oder Glimmer und/oder Aluminiumoxid und/oder Aluminiumnitrid und/oder Buckyballs und/oder Kupfer und/oder Kupferoxid und/oder lon und/oder Eisen-Kobalt-Legierung und/oder Eisen-NickelLegierung und/oder Magnesium und/oder Magnesiumoxid und/oder magnetischen Nanopartikeln und/oder magnetischen Nanostrukturen und/oder Magnetit und/oder Nanodots und/oder Nanobelts und/oder Nanokristallen und/oder pulverförmigen Nanoschmiermitteln und/oder Nanostäbchen und/oder Nanoschleifschwämmen und/oder Nickelnioboxid und/oder Quantenpunkte und/oder Silber und/oder Titandioxid und/oder Titan und/oder Wolfram und/oder Vanadiumoxid und/oder Halbleiter-Nanopartikel und/oder Zirconium und/oder Zirconiumoxid und/oder Zirconiumsilikat und/oder Mischungen davon. Dabei können die Kohlenstoff-Nanoröhrchen als einwandige (single-walled carbon nanotubes (SWCNT) oder als mehrwandige (multi-walled carbon nanotubes (MWCNT) oder als doppelwandige Kohlenstoffnanoröhrchen (DWCNT) oder Mischungen davon bestehen. Darüber hinaus umfassen Kohlenstoffnanofasern auch sogenannte Vapor-Grown-Kohlenstoffnanofasern.

Für die Durchführung des Verfahrens ist es weiterhin günstig, wenn die Ausgangsmischung zusätzlich Verarbeitungshilfsmittel und/oder Vernetzungsmittel und/oder Weichmacher und/oder Treibmittel und/oder Schmiermittel und/oder grenzflächenaktive Stoffe und/oder Konsistenzverbesserer und/oder Farbstoffe und/oder Pigmente und/oder Glimmer und/oder Flammverzögerungsmaterial und/oder Stabilisatoren und/oder Haftvermittler und/oder Mischungen davon enthält.

Vorzugsweise enthält das Polymer für die Ausgangsmischung Polyketon und/oder Polyetherketon und/oder Polyethylen und/oder Polypropylen und/oder Polyimide und/oder Polymere aus der Produktfamilie von IMITEC, insbesondere auf der Basis einer Lizenz des NASA Langley Research Centers, und/oder Polyarylenether und/oder Polysulfone und/oder Polyamide und/oder Polyester und/oder Polystyrol und/oder Acrylnitril-Butadien-Styrol (ABS) und/oder Polyacryl und/oder celluloid und/oder Celluloseacetat und/oder Ethylenvinylacetate (EVA) und/oder Ethylenvinylalkohol (EVAL) und/oder Polytetrafluorethylen (PTFE) und/oder Fluorethylenpropylen (FEP) und/oder Perfluoralkoxy (PFA) und/oder Chlortrifluorethylen (CTFE) und/oder Polyethylentrifluorethylen (ECTFE) und/oder Polyethylentetrafluorethylen (ETFE) und/oder lonomere und/oder Flüssigkristallpolymer (LCP) und/oder Polyoxymethylen (POM) und/oder Polyacrylonitril (PAN) und/oder Polyamidimide (PAI) und/oder Polyaryletherketon (PAEK) und/oder Polybutadien (PBD) und/oder Polybutylene und/oder Polybutyleneterephthalat (PBT) und/oder Polyethylenterephthalat (PET) und/oder Polycyclohexylendimethyleneterephthalat (PCT) und/oder Polycarbonat und/oder Polyhydroxyalkanoate (PHA) und/oder Polyester und/oder Polyetherimide (PEI) und/oder Polysulfone und/oder Polyethersulfone und/oder gechlortes Polyethylen (CPE bzw. polyethylenechlorinates (PEC)) und/oder Polymilchsäure und/oder Polymethylpentene und/oder Polyphenylenoxid und/oder Polyazoles und/oder Polyphenylensulfid (PPS) und/oder Polyphthalamid (PPA) und/oder Polyvinylchlorid (PVC) und/oder Polyvinylidenchlorid (PVCD) und/oder Mischungen davon.

Des weiteren wird der erfindungsgemäße Verbundwerkstoff zur Herstellung einer, insbesondere einer mechanisch stabilen und/oder chemisch stabilen und/oder thermisch stabilen, Membran oder einer Faser oder eines Films oder einer Folie oder einer Beschichtung oder eines Formteils oder in Brandschutzstrukturen oder als Flammverzögerungsmaterial oder als leitfähiger Draht oder als Drahtschutzhülle oder als Antistatikmaterial oder als Konstruktionsbauteil für den Kraftfahrzeugbereich oder für Bauteile für die Luftfahrt oder in Textilien, insbesondere Bekleidungstextilien, oder als Verstärkungsmaterial verwendet wird.

Durch Verwendung eines Kalanders oder einer Kalandriereinrichtung zur Herstellung eines Verbundwerkstoffes, wobei der Verbundwerkstoff Nanokomposite auf Polymerbasis aufweist, wird das Verfahren, wie voranstehend beschrieben, ausgeführt. Zur Vermeidung von Wiederholungen wird auf die obigen Ausführungen ausdrücklich verwiesen.

Im Rahmen der vorliegenden Anmeldung wird unter einer Ausgangsmischung bzw. einer Mischung auch eine Suspension und/oder eine kolloide Dispersion verstanden. Eine Suspension ist eine heterogene Mischung, wenn sie nicht gleichmäßig in der Mischung verteilt ist. Die heterogenen Mischungen sind Mischungen mit einer uneinheitlichen Zusammensetzung.

Als kolloiden Dispersionen werden homogene Mischungen bezeichnet, in denen die Teilchen von ein oder mehreren Bestandteilen mindestens eine Größe im Bereich von 1 nm bis 1000 nm aufweisen, größer als die in einer Lösung, jedoch kleiner als die in einer Suspension.

Die Erfindung wird nachstehend ohne Beschränkung des allgemeinen Erfindungsgedankens anhand von Ausführungsbeispielen unter Bezugnahme auf die weiteren Zeichnungen exemplarisch beschrieben, wobei bezüglich aller im Text nicht näher erläuterten erfindungsgemäßen Einzelheiten ausdrücklich auf die Zeichnungen verwiesen wird. Es zeigen:
- Figur 2: die Änderung des Speichermoduls (E') der CB/POD Nr. 1-Nanokomposite in Abhängigkeit von der Temperatur;
- Figur 3: die Änderung des Verlustfaktors tan δ der CB/POD-Nr. 1-Nanokomposite in Abhängigkeit von der Temperatur;
- Figur 4: die Spannungs-Dehnungskurven der CB/POD Nr.1 -Nanokomposite;
- Figur 5: Diagramme für die Zugfestigkeit und die Bruchdehnung der POD Nr. 1 - Nanokomposite in Abhängigkeit vom Gehalt an Kohlenschwarz (CB);
- Figur 6: die Änderung des Speichermoduls (E') von verschiedenen CB/POD Nr. 2-Nanokompositen mit unterschiedlichen Gehalten an Kohlenschwarz (CB) in Abhängigkeit von der Temperatur;
- Figur 7: die Änderung des Speichermoduls (E') der CB/POD Nr. 2-Nanokomposite in Abhängigkeit von der Konzentration von Kohlenschwarz (Carbon Black (CB)) der CB/POD Nr. 2-Nanokompositen;
- Figur 8: die Änderung des Verlustfaktors tan δ der CB/POD- Nr. 2-Nanokomposite in Abhängigkeit von der Tempe- ratu r;
- Figur 9: die Spannungs-Dehnungskurven der CB/POD Nr. 2 - Nanokomposite;
- Figur 10: AFM-Aufnahmen der Bruchfläche der POD Nr. 2- Nanokomposite, die mit 0,5 Gew.-% CB verstärkt wurden, nach der Durchführung von Zugversuchen.
- Figur 11: TEM-Aufnahmen der Bruchfläche der POD Nr. 2- Nanokomposite, die mit 0,5 Gew.-% CB verstärkt wurden, nach der Durchführung von Zugversuchen.

### BEISPIELE

Polyoxadiazole Nr. 1, verstärkt mit Ruß (POD Nr. 1 + Kohlenschwarz (Carbon Black (CB))

### Materialien

Alle Reaktionsstoffe und Lösungsmittel wurden von Aldrich Chemical bezogen und wie erhalten verwendet. Dicarbonsäure-4,4'-diphenylether DPE (99 %), Dimethylsulfoxid DMSO (>99 %), Hydrazinsulfat HS (>99 %), Natriumhydroxid NaOH (99 %), Polyphosphorsäure PPA (115% H₃PO₄), Ruß (CB, durchschnittliche Teilchengröße: 18 nm, Sₘ: >250 m²/g, Evonik Degussa).

### Synthese von POD Nr. 1

Hydrazinsulfat HS und Dicarbonsäure-4,4'-diphenylether DPE wurden in Polyphosphorsäure PPA bei 160°C in Stickstoffatmosphäre 6 h lang zur Reaktion gebracht. Die molare Verdünnungsrate (PPA/HS) und die molare Monomerrate (HS/DPE) wurden konstant gehalten und entsprachen 10 beziehungsweise 1,2. Anschließend wurde das Reaktionsmedium in Wasser gegossen, das 5 % Gew./Volumen Natriumhydroxid (99 %, Vetec) enthielt, um das Polymer auszufällen. Dann wurde die Polymerprobe in kleine Stücke zerkleinert.

Die Suspension, die das zerkleinerte Material enthielt, wurde abschließend in einen Behälter gebracht, in dem die Reinigung stattfindet. Das erhaltene POD Nr. 1 besitzt eine Molekülmasse von 440.000 g/mol, eine Polydispersität von 2 und einen Sulfonierungsgrad von 54 %.

### Verarbeitung von Nanokompositen aus POD Nr. 1 + 5 Gew.-% CB

Es wurde eine Lösung mit einer Polymerkonzentration von 10 Gew.-% in DMSO hergestellt. Zusätzlich wurde auch eine Lösung hergestellt, die DMSO und CB (5 Gew.-% bezogen auf das Polymergewicht) enthielt. Die Lösungen wurden mit einem Magnetrührer 3 h lang bei 60°C gerührt. Später wurden die Lösungen zusammengebracht, um eine Mischung herzustellen.

Anschließend wurde die Mischung zum abschließenden Vermischen bei einer hohen Scherbeanspruchung einem Kalander zugeführt. Die Größe des Spalts zwischen den Walzen betrug 5 µm (erste Walze), 10 µm (zweite Walze) und die Geschwindigkeit wurde auf 50 U/min eingestellt. Die Suspension wurde aufgefangen und unter Rühren 3 h lang bei 60°C erneut in DMSO gelöst. Homogene Folien wurden in Glasplatten gegossen.

Nach dem Gießen wurde das DMSO in einem Vakuumofen 24 h lang bei 90°C verdampfen gelassen. Um Lösungsmittelreste weiter zu entfernen, wurden die Membranen 24 h lang bei 50°C in ein Wasserbad getaucht und in einem Vakuumofen 24 h lang bei 90°C getrocknet. Die Enddicke der Folien betrug etwa 60 µm.

### Instrumentelle Ausrüstung

Mit einem Elementaranalysator 1108 von Carlo Erba wurde eine Elementaranalyse durchgeführt. Thermogravimetrische Versuche (TGA) wurden mit einem Netzsch 209 TG, das mit einer Thermoanalysesteuerung TASC 414/3 ausgestattet war, durchgeführt. Die Sammelprobe wurde unter Argon bei 10°C/min von 100°C auf 900°C erwärmt.

Die dynamisch-mechanische Thermoanalyse (DMTA) wurde unter Verwendung des TA-Geräts RSA 2 mit einem Filmzugmodus bei einer Frequenz von 1 Hz und einer statischen Ausgangskraft von 0,1 N durchgeführt. Die Temperatur wurde bei einer Heizrate von 2°C/min und einer gleich bleibenden Dehnung von 0,05 % von 25°C bis 500°C verändert.

Es wurden Zugversuche gemäß ASTM D882-00 unter Verwendung einer Zwick-Roell-Maschine mit einem 500-N-Kraftaufnehmer durchgeführt. Die gefundenen Werte entsprechen einem Durchschnitt von mindestens acht Proben.

Thermische und dynamisch-mechanische Eigenschaften von Nanokompositen aus POD Nr. 1 + 5 Gew.-% CB

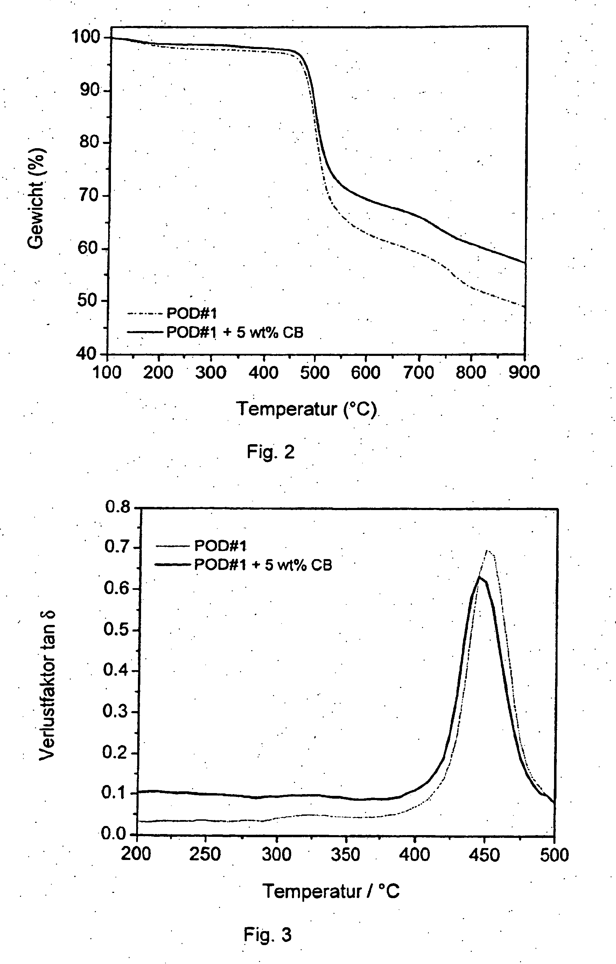

Fig. 2 zeigt die Änderung des Speichermoduls E' der CB/POD Nr. 1 Nanokomposite in Abhängigkeit der Temperatur.

Figur 2 zeigt die thermooxidative Stabilität der Verbundwerkstoffe. Insgesamt betrachtet nahm die Wärmestabilität von Nanokompositen in Argon zu, was sich dadurch zeigt, dass die Temperatur (T_{d5%}), bei der die Verbundwerkstoffe aus POD Nr. 1 + 5 Gew.-% einen Verlust von 5 Gew.-% aufwiesen, bei 476°C lag, während das entsprechende Homopolymer bei 467°C lag. Die Ausbeute in Argon bei 800°C betrug 52 % für das reine Polymer beziehungsweise 61 % für die Verbundwerkstoffe.

In Figur 3 ist die Änderung des Verlustfaktors tan δ (tan δ = Verlustmodul E"/Speichermodul E') für das reine Polymer und den Verbundwerkstoff in Abhängigkeit von der Temperatur aufgetragen. Wird der T_{g}-Wert, der aus dem tan δ-Peak erhalten wird, in Abhängigkeit von der Temperatur betrachtet, kann festgestellt werden, dass T_{g} von 451°C bei dem reinen Polymer auf 444°C bei dem Verbundwerkstoff sinkt. Zusätzlich gibt die Größenordnung von tan δ den relativen Betrag an mechanischer Energie an, die während der Wechselbeanspruchung in den DMTA-Versuchen verloren geht.

Ein Werkstoff ist vollkommen elastisch, wenn tan δ Null beträgt; vollkommen viskos, wenn tan δ unendlich ist, und gleichermaßen elastisch und viskos, wenn tan δ eins beträgt.

Wie in Fig. 3 dargestellt ist, nahm der tan δ-Wert von 0,69 auf 0,63 ab, als 5 Gew.-% CB zu der POD-Matrix gegeben wurden. Die Wechselwirkungen zwischen CB und der Polyoxadiazolmatrix verringern das freie Volumen in den Nanokompositen, sorgen dafür, dass sie sich elastischer verhalten und führen dadurch zu der beobachteten Verringerung der Intensität des tan δ-Peaks. Dieses Ergebnis weist ferner darauf hin, dass CB durch die gute Verteilung und Wechselwirkung die POD-Matrix verstärkt.

Zugeigenschaften von Nanokompositen aus POD Nr. 1 + 5 Gew.-% CB

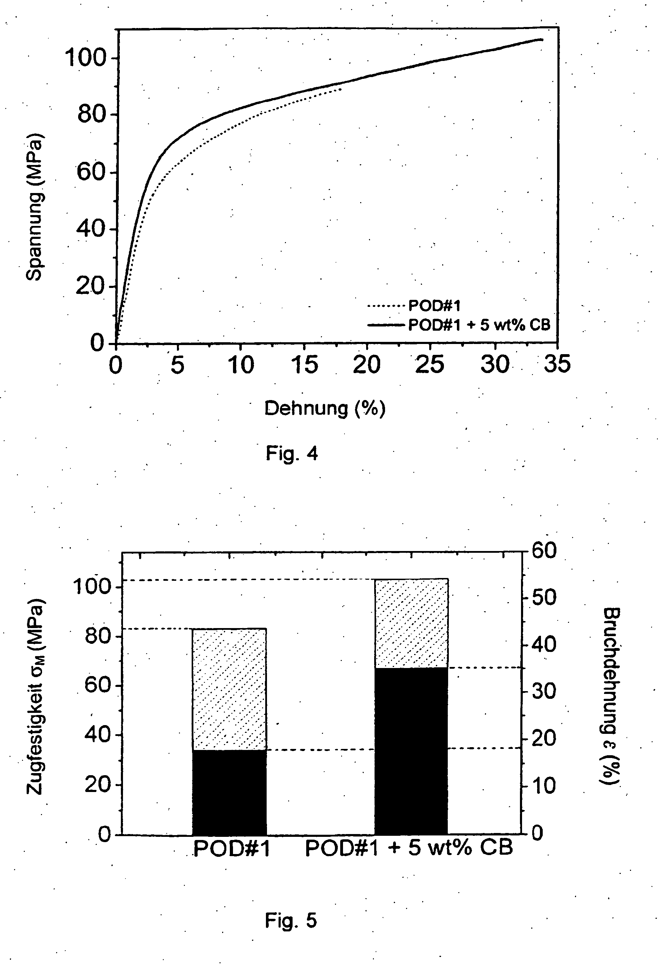

Figur 4 zeigt die Spannungsdehnungskurven des reinen POD Nr. 1 und von POD Nr. 1, das 5 Gew.-% CB enthält, und Fig. 5 zeigt die Änderung der Zugfestigkeit und der Bruchdehnung in Abhängigkeit vom CB-Gehalt. Die Zugfestigkeit steigt bei den Nanokompositen bis zu 24 %. Des Weiteren wird das POD, wie in Fig. 5 dargestellt ist, durch die Zugabe von CB duktiler. Durch Zugabe von 5 Gew.-% CB steigt die Bruchdehnung an bzw. nimmt um bis zu 96 % zu.

### Polyoxadiazole Nr. 2, verstärkt mit Ruß (POD Nr. 2 + CB)

### Materialien

Alle Reaktionsstoffe und Lösungsmittel wurden von Aldrich Chemical bezogen und wie erhalten verwendet. Dicarbonsäure-4,4'-diphenylether DPE (99 %), Dimethylsulfoxid DMSO (>99 %), Hydrazinsulfat HS (>99 %), Natriumhydroxid NaOH (99 %), Polyphosphorsäure PPA (115% H₃PO₄), Ruß (CB, durchschnittliche Teilchengröße: 18 nm, Sₘ: >250 m²/g, Evonik Degussa).

### Synthese von POD Nr. 2 + 0,1/ 0,5/ 1,0 Gew.-% CB

Zuerst wurden Polyphosphorsäure PPA und Ruß (0,02 g : 0,1 Gew.-%, 0,1 g : 0,5 Gew.-% und 0,2 g : 1,0 Gew.-%) in den Kolben gegeben und bei Ultraschallbehandlung und gleichzeitigem maschinellen Rühren 1 h lang auf 80°C erwärmt. Anschließend wurden Hydrazinsulfat HS und 4-4'-Oxybisbenzoesäure DPE zu der Mischung gegeben und unter maschinellem Rühren bei 160°C 4 h lang zur Reaktion gebracht.

Am Ende der Reaktion wurde die fertige Lösung in Form stabiler Fasern in Wasser ausgefällt, das 5 % Gew./Volumen Natriumhydroxid enthielt. Die Ausbeute des fertigen Polymers lag stets nahe bei 100 % in Bezug auf den limitierenden Reaktionspartner.

Verarbeitung von Nanokompositen aus POD Nr. 2 + 0,1 Gew.-% / 0,5 Gew.-% /1,0 Gew.-% CB

Es wurde eine Lösung mit einer Verbundwerkstoffkonzentration von 10 Gew.-% in DMSO hergestellt. Die Lösungen wurden mit einem Magnetrührer 3 h lang bei 60°C gerührt. Anschließend wurde die Lösung zum abschließenden Vermischen bei einer hohen Scherbeanspruchung einem Kalander zugeführt. Die Größe des Spalts zwischen den Walzen betrug 5 µm (erste Walze), 10 µm (zweite Walze) und die Geschwindigkeit wurde auf 50 bis 600 U/min eingestellt. Die Suspension wurde aufgefangen und unter Rühren 3 h lang bei 60°C erneut in DMSO gelöst. Homogene Folien wurden in Glasplatten gegossen.

Nach dem Gießen wurde das DMSO in einem Vakuumofen 24 h lang bei 90°C verdampfen gelassen. Um Lösungsmittelreste weiter zu entfernen, wurden die Membranen 24 h lang bei 50°C in ein Wasserbad getaucht und in einem Vakuumofen 24 h lang bei 90°C getrocknet. Die Enddicke der Folien betrug etwa 60 µm.

### Instrumentelle Ausrüstung

Die Folienmorphologie wurde mit einem Rasterelektronenmikroskop (REM) LEO 1550VP betrachtet. Die TEM-Aufnahmen wurden unter Verwendung eines Feldemissions-Transmissionselektronenmikroskops (TEM) Tecnai G2 F20 bei einer Beschleunigungsspannung von 200 kV erhalten; die Proben wurden unter Verwendung eines Ultracut-Mikrotoms mit Diamantmesser in Scheiben mit einer Dicke von 80 nm geschnitten.

Unter Verwendung eines Multimode-Rastersondenmikroskops mit einer Nanoscope-IV-Steuerung von Digital Instruments Inc. (Veeco Metrology Group) wurden die Proben rasterkraftmikroskopisch (AFM) untersucht. Die AFM-Untersuchungen wurden an Luft unter Umgebungsbedingungen (25°C) mit Sonden im dynamischen Modus mit konstanter Amplitude durchgeführt. Es wurden mikroskopische Abbildungen im topographischen Modus und im Phasenkontrastmodus erhalten.

Die dynamisch-mechanische Thermoanalyse (DMTA) wurde unter Verwendung des TA-Geräts RSA 2 mit einem Filmzugmodus bei einer Frequenz von 1 Hz und einer statischen Ausgangskraft von 0,1 N durchgeführt. Die Temperatur wurde bei einer Heizrate von 2°C/min und einer gleich bleibenden Dehnung von 0,05 % von 25°C bis 500°C verändert.

Es wurden Zugversuche gemäß ASTM D882-00 unter Verwendung einer Zwick-Roell-Maschine mit einem 500-N-Kraftaufnehmer durchgeführt. Die gefundenen Werte entsprechen einem Durchschnitt von mindestens acht Proben.

Dynamisch-mechanische Eigenschaften von Nanokompositen aus POD Nr. 2 + 0,1 Gew.-% / 0,5 Gew.-% / 1,0 Gew.-% CB

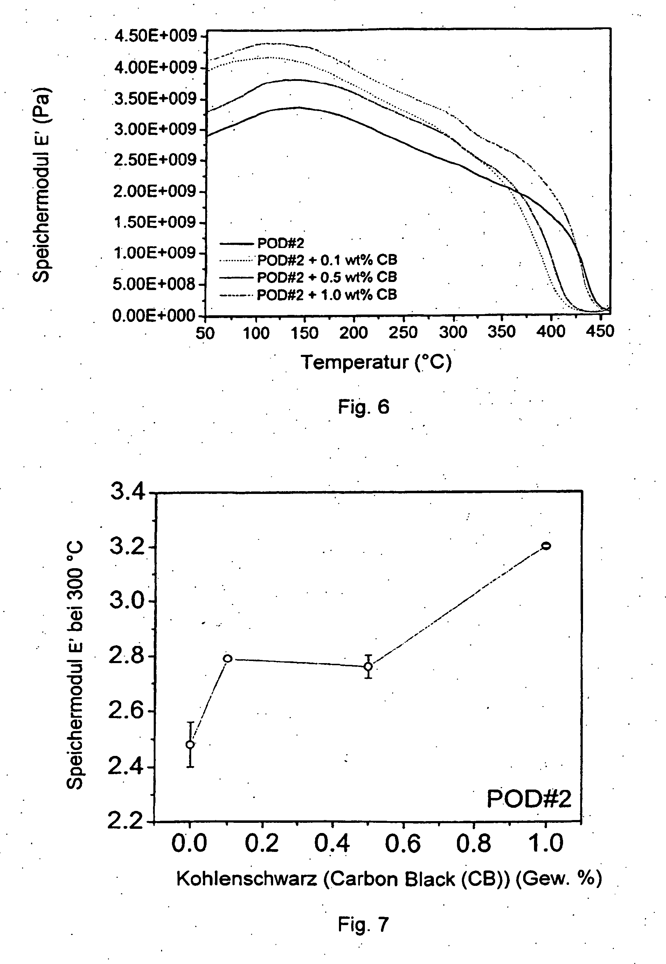

Figur 6 zeigt die DMTA-Kurven für die Verbundwerkstoffe und die Änderung der Werte für den Speichermodul E' (bei 300°C) in Abhängigkeit von der CB-Konzentration sind auch in Fig. 7 dargestellt.

Die Werte für den Speichermodul E', die mit dem Elastizitätsmodul der Werkstoffe in Wechselbeziehung stehen, betragen für das reine POD Nr. 2 und die Verbundwerkstoffe aus POD Nr. 2/CB, die 0,1, 0,5 und 1,0 Gew.-% CB enthalten, bei 100°C 3,18, 4,16, 3,70 beziehungsweise 3,92 GPa. Bei Verwendung von lediglich 0,1 Gew.-% CB steigt der Speichermodul E' bei dieser Temperatur bis zu 31 %.

Es ist weiter dargestellt, dass der Speichermodul E' mit der CB-Menge (Fig. 7) merklich ansteigt und die Nanokomposite sogar bei 300°C eine hohe Steifigkeit beibehalten, wodurch dieser Werkstoff bei Hochtemperaturanwendungen eingesetzt werden kann. Die Erhöhung von E', die bei den Verbundwerkstoffen mit 0,1 bis 0,5 Gew.-% CB zu beobachten ist, spiegelt die Wechselwirkung zwischen CB und POD Nr. 2 wider, wodurch die Kettenpackung und die homogene Verteilung verbessert werden.

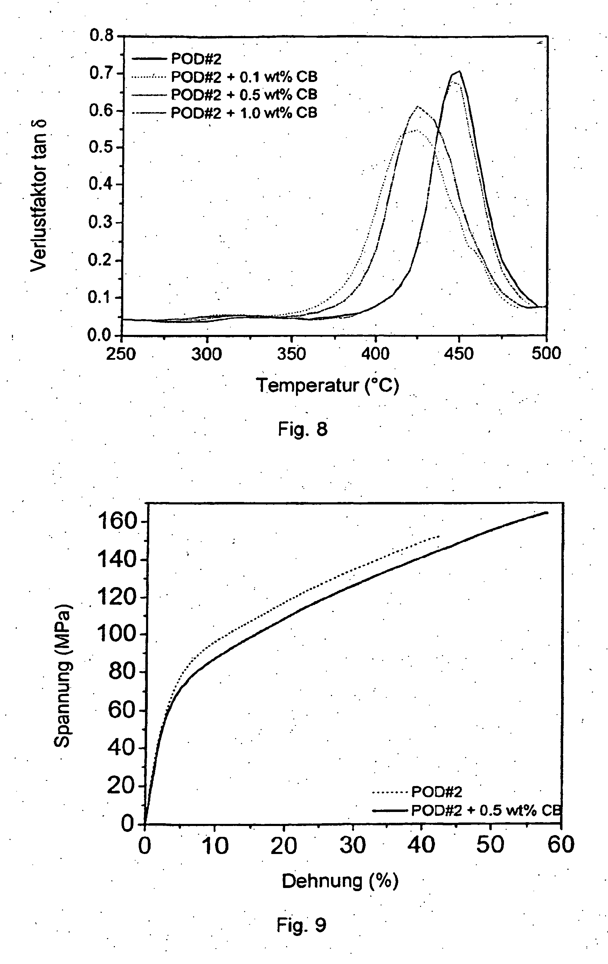

Die Änderung des Verlustfaktors tan δ bei unterschiedlichem CB-Gehalt ist in Figur 8 in Abhängigkeit von der Temperatur aufgetragen. Wird der T_{g}-Wert, der aus dem tan δ-Peak erhalten wird, in Abhängigkeit von der Temperatur (Fig. 8) betrachtet, kann festgestellt werden, dass T_{g} bei Zugabe von 0,5 Gew.-% CB bis zu 26°C sinkt.

Darüber hinaus gibt die Größenordnung von tan δ den relativen Betrag an mechanischer Energie an, die während der Wechselbeanspruchung in den DMTA-Versuchen verloren geht.

Wie in Fig. 8 dargestellt ist, nahm der Wert für tan δ von 0,71 auf 0,56 ab, als 0,1 Gew.-% CB zur POD-Matrix gegeben wurden. Die Wechselwirkungen zwischen CB und der Polyoxadiazolmatrix verringern das freie Volumen in den Nanokompositen, sorgen dafür, dass sie sich elastischer verhalten und führen dadurch zu der beobachteten Verringerung der Intensität des tan δ-Peaks.

Die Verbundwerkstoffe mit 1,0 Gew.-% CB zeigen keine wesentlichen Änderungen des tan δ-Werts. Dieses Ergebnis weist ferner darauf hin, dass CB durch die gute Verteilung und Wechselwirkung die POD-Matrix verstärkt.

Zugeigenschaften von Nanokompositen aus POD Nr. 2 + 0,1 Gew.-% / 0,5 Gew.-% / 1,0 Gew.-% CB

**Tabelle 1**

| Kohlenschwarz (Carbon Black (CB)) | Elastizitätsmodul E | Zugfestigkeit σM | Reißdehnung ε |
|---|---|---|---|
| (Gew.%) | (MPa) | (MPa) | (%) |
| 0.0 | 2690 ± 42 | 153 ± 8 | 45.7 ± 6.8 |
| 0.1 | 2840 ± 100 | 118 ± 8 | 21.5 ± 4.0 |
| 0.5 | 2680 ± 84 | 161 ± 7 | 59.0 ± 5.4 |
| 1.0 | 2270 ± 130 | 109 ± 7 | 34.5 ± 1.0 |

| | | | |
|---|---|---|---|
| E: Elastizitätsmodul; σ_{M}: Zugfestigkeit; ε: Reißdehnung | | | |

In Tabelle 1 sind die Zugeigenschaften des CB/POD Nr. 2 Nanokompositen zusammengefasst.

Figur 9 zeigt die Spannungsdehnungskurven des reinen POD Nr. 2 und von POD Nr. 2, das 0,5 Gew.-% CB enthält. In diesem Fall nahm die Zugfestigkeit um 5 % zu und die Bruchdehnung um 29 % (Fig. 9). Diese Erhöhung spiegelt sich in einer wesentlichen Verbesserung der Festigkeit der Verbundwerkstoffe im Verhältnis zum reinen Polymer wider.

Die starke Wechselwirkung zwischen dem funktionalisierten CB und der Matrix aus POD Nr. 2 verbesserte sowohl die Verteilung als auch die Adhäsion an der Grenzfläche sehr, wodurch sich die mechanischen Eigenschaften der Verbundwerkstoffe, die 0,5 Gew.-% CB enthielten, insgesamt verbesserten.

Morphologische Eigenschaften von Nanokompositen aus POD Nr. 2 + 0,1 Gew.-% / 0,5 Gew.-% / 1,0 Gew.-% CB

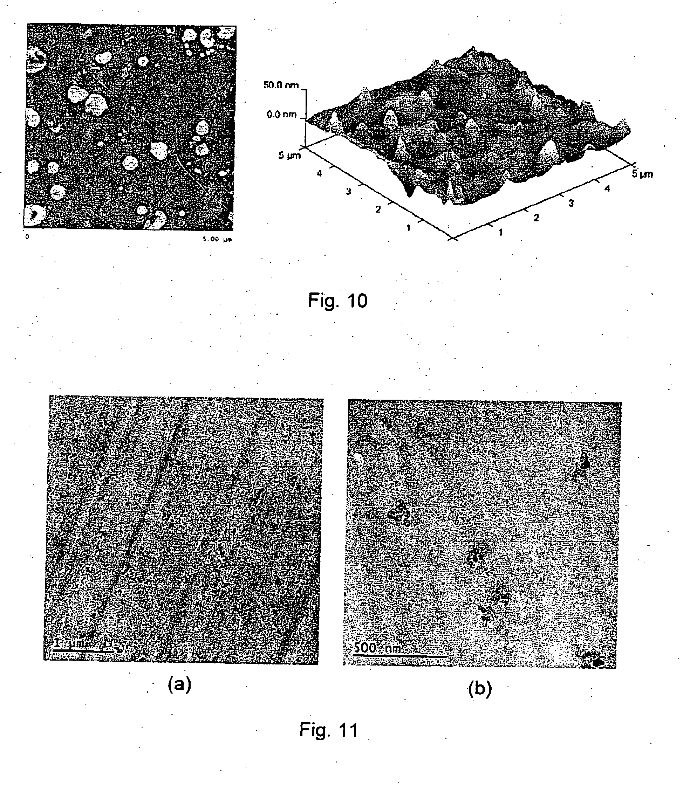

Nach der Durchführung der Zugversuche an den Verbundwerkstoffen aus POD Nr. 2, die mit 0,5 Gew.-% CB verstärkt waren, wurde die Bruchfläche mit dem AFM und TEM betrachtet, um den Verteilungszustand von CB in der Polyoxadiazolmatrix zu untersuchen. Wie in den AFM-Abbildungen (Fig. 10) dargestellt ist, bildete CB eine Kern-Hülle-Struktur in der Größenordnung von 50 bis 200 nm, die von dem Polymer benetzt war. Es konnte eine gute Homogenität festgestellt werden.

In Übereinstimmung mit den AFM-Ergebnissen bestätigen die TEM-Aufnahmen (Fig. 11) die gleiche Kern-Hülle-Struktur von Kohlenschwarz CB, die von dem Polyoxadiazol umhüllt ist. Die vergrößerte Figur 11 (b) zeigt eine CB-Kern-Hülle-Struktur, die in Richtung der aufgebrachten Beanspruchung durch den Widerstand gegen den aufgetretenen Bruch gestreckt ist, was einen synergistischen Effekt des CB während des Bruchs nahelegt.

## Patentansprüche

1. Verfahren zum Herstellen eines Verbundwerkstoffs, wobei der Verbundwerkstoff Nanokomposite auf Polymerbasis aufweist, mit den folgenden Verfahrensschritten:
a.) Bereitstellen einer Ausgangsmischung aus wenigstens einem Polymer und wenigstens einem Füllstoff, insbesondere wenigstens einem nanoskopischen Füllstoff, wobei
i.) die Ausgangsmischung durch Mischung von wenigstens einem in einem Polymerlösungsmittel gelösten Polymer und von wenigstens einem in einem Füllstofflösungsmittel gelösten Füllstoff als Edukte bereitgestellt wird, wobei der Mischungsvorgang durch Rühren und/oder durch Ultraschallbeaufschlagung erfolgt, so dass als Ausgangsmischung eine in einer Flüssigkeit gelöste Ausgangsmischung bereitgestellt wird, oder
ii.) die Ausgangsmischung durch Mischung von einem wenigstens festen Polymer und wenigstens einem festen Füllstoff als trockene Ausgangsmischung bereitgestellt wird, wobei der Mischungsvorgang durch Rühren und/oder durch Ultraschallbeaufschlagung und/oder unter Verwendung von einer Mahlvorrichtung erfolgt, so dass als Ausgangsmischung eine trockene Ausgangsmischung bereitgestellt wird,
b.) Zuführen der Ausgangsmischung aus Verfahrensschritt a.) zu einem Kalander, so dass die Ausgangsmischung durch den Kalander kalandriert wird und ein Zwischenprodukt mit einer Polymermatrix mit darin homogen verteiltem Füllstoff, vorzugsweise nanoskopischem Füllstoff, gewonnen wird, und
c.) Verarbeiten des Zwischenprodukts aus Verfahrensschritt b.) unter Verwendung eines Gießverfahrens von Lösungen und/oder unter Verwendung eines Formverfahrens und/oder unter Verwendung eines Extrusionsverfahrens und/oder unter Verwendung eines Spinnverfahrens zu einem Verbundwerkstoff.

2. Verfahren nach Anspruch 1, **dadurch gekennzeichnet, dass** die Ausgangsmischung vor dem Zuführen zum Kalander mit Ultraschall beaufschlagt wird.

3. Verfahren nach Anspruch 1 oder 2, **dadurch gekennzeichnet, dass** als Polymerlösungsmittel oder als Füllstofflösungsmittel oder als Lösungsmittel ein polares Lösungsmittel und/oder ein unpolares Lösungsmittel oder Lösungsmittelsysteme in Form von Säuren, insbesondere starke Säuren, oder eine Mischung davon verwendet werden.

4. Verfahren nach einem der Ansprüche 1 bis 3, **dadurch gekennzeichnet, dass** die Bereitstellung der Ausgangsmischung bei einer Temperatur von 1°C bis 300°C, insbesondere zwischen 10°C und 200°C oder insbesondere zwischen 20°C und 150°C, erfolgt.

5. Verfahren nach einem der Ansprüche 1 bis 4, **dadurch gekennzeichnet, dass** die Konzentration des Füllstoffs in der Ausgangsmischung oder die Konzentration des Füllstoffs in dem Füllstofflösungsmittel oder die Konzentration des Füllstoffs in dem Lösungsmittel größer 0 Gew.-% (> Null) und kleiner/gleich (≤) 50 Gew.-%, insbesondere zwischen 0 Gew.-% und 20 Gew.-% oder zwischen 0,0001 Gew.-% und 15 Gew.-%, beträgt.

6. Verfahren nach einem der Ansprüche 1 bis 5, **dadurch gekennzeichnet, dass** die Kalandrierbehandlung im Verfahrensschritt b.) bei einer Temperatur von 10°C bis 500°C, insbesondere zwischen 15°C und 400°C oder insbesondere zwischen 20°C und 350°C, durchgeführt wird und/oder dass die Kalandrierbehandlung in einem Zeitrahmen von 1 Sekunde bis 2 Stunden, insbesondere in einem Zeitrahmen von 5 Sekunden bis 1 Stunde oder insbesondere in einem Zeitrahmen von 5 Sekunden bis 30 Minuten, durchgeführt wird.

7. Verfahren nach einem der Ansprüche 1 bis 6, **dadurch gekennzeichnet, dass** nach Durchführung des Verfahrensschritts b.) das Zwischenprodukt vor seiner Weiterverarbeitung in einem Lösemittel gelöst wird, wobei insbesondere das erneute Lösen des Zwischenprodukts bei einer Temperatur von 1°C bis 300°C, insbesondere zwischen 10°C und 200°C oder insbesondere zwischen 20°C und 150°C, erfolgt, und/oder dass das Zwischenprodukt zur Durchführung des Spinnverfahrens in einem Lösemittel gelöst wird, wobei insbesondere als Lösemittel ein polares Lösungsmittel oder ein unpolares Lösungsmittel oder Lösungsmittelsysteme in Form von Säuren, insbesondere starke Säuren, oder eine Mischung davon verwendet werden.

8. Verfahren nach einem der Ansprüche 1 bis 7, **dadurch gekennzeichnet, dass** der Füllstoff aus, insbesondere modifiziertem oder nicht modifiziertem, Ruß (CB) und/oder Kohlenstoff-Nanofasern und/oder Kohlenstoff-Nanoröhrchen und/oder Fullerene und/oder amorphem Kohlenstoff und/oder Zeolith und/oder Graphen und/oder Molekularsieb-Kohlenstoff und/oder Graphit und/oder pyrolysierten Polymerpartikeln und/oder Aluminiumoxid und/oder Zinkoxid und/oder Siliziumdioxid und/oder Silikaten und/oder Polymerfasern und/oder Glasfasern und/oder Calciumcarbonatpulvern und/oder Bariumsulfat und/oder Kaolin und/oder Titandioxid und/oder Eisenoxid und/oder organischen Harzen und/oder natürlichen mineralischen Füllstoffen und/oder synthetischen mineralischen Füllstoffen und/oder Tonen und/oder Aluminiumsilikat und/oder Hektorit und/oder Montmorillonit und/oder Bentonit und/oder Beidelit und/oder Saponit und/oder Stevensit und/oder Sauconit und/oder Nontronit und/oder Gold und/oder wasserhaltigen Metallhydroxiden und/oder Smektiten und/oder Vermiculiten und/oder Glimmer und/oder Aluminiumoxid und/oder Aluminiumnitrid und/oder Buckyballs und/oder Kupfer und/oder Kupferoxid und/oder Ion und/oder Eisen-Kobalt-Legierung und/oder Eisen-Nickel-Legierung und/oder Magnesium und/oder Magnesiumoxid und/oder magnetischen Nanopartikeln und/oder magnetischen Nanostrukturen und/oder Magnetit und/oder Nanodots und/oder Nanobelts und/oder Nanokristallen und/oder pulverförmigen Nanoschmiermitteln und/oder Nanostäbchen und/oder Nanoschleifschwämmen und/oder Nickelnioboxid und/oder Quantenpunkte und/oder Silber und/oder Titandioxid und/oder Titan und/oder Wolfram und/oder Vanadiumoxid und/oder Halbleiter-Nanopartikel und/oder Zirconium und/oder Zirconiumoxid und/oder Zirconiumsilikat und/oder Mischungen davon besteht.

9. Verfahren nach einem der Ansprüche 1 bis 8, **dadurch gekennzeichnet, dass** die Ausgangsmischung zusätzlich Verarbeitungshilfsmittel und/oder Vernetzungsmittel und/oder Weichmacher und/oder Treibmittel und/oder Schmiermittel und/oder grenzflächenaktive Stoffe und/oder Konsistenzverbesserer und/oder Farbstoffe und/oder Pigmente und/oder Glimmer und/oder Flammverzögerungsmaterial und/oder Stabilisatoren und/oder Haftvermittler und/oder Mischungen davon enthält.

10. Verfahren nach einem der Ansprüche 1 bis 9, **dadurch gekennzeichnet, dass** das Polymer Polyketone und/oder Polyetherketone und/oder Polyethylen und/oder Polypropylen und/oder Polyimide und/oder Polymere aus der Produktfamille von IMITEC und/oder Polyarylenether und/oder Polysulfone und/oder Polyamide und/oder Polyester und/oder Polystyrol und/oder Acrylnitril-Butadien-Styrol (ABS) und/oder Polyacryl und/oder Celluloid und/oder Celluloseacetat und/oder Ethylenvinylacetate (EVA) und/oder Ethylenvinylalkohol (EVAL) und/oder Polytetrafluorethylen (PTFE) und/oder Fluorethylenpropylen (FEP) und/oder Perfluoralkoxy (PFA) und/oder Chlortrifluorethylen (CTFE) und/oder Polyethylentrifluorethylen (ECTFE) und/oder Polyethylentetrafluorethylen (ETFE) und/oder Ionomere und/oder Flüssigkristallpolymer (LCP) und/oder Polyoxymethylen (POM) und/oder Polyacrylonitril (PAN) und/oder Polyamidimide (PAI) und/oder Polyaryletherketon (PAEK) und/oder Polybutadien (PBD) und/oder Polybutylene und/oder Polybutyleneterephthalat (PBT) und/oder Polyethylenterephthalat (PET) und/oder Polycyclohexylendimethyleneterephthalat (PCT) und/oder Polycarbonat und/oder Polyhydroxyalkanoate (PHA) und/oder Polyester und/oder Polyetherimide (PEI) und/oder Polysulfone und/oder Polyethersulfone und/oder gechlortes Polyethylen (CPE bzw. polyethylenechlorinates (PEC)) und/oder Polymilchsäure und/oder Polymethylpentene und/oder Polyphenylenoxid und/oder Polyazoles und/oder Polyphenylensulfid (PPS) und/oder Polyphthalamid (PPA) und/oder Polyvinylchlorid (PVC) und/oder Polyvinylidenchlorid (PVCD) und/oder Mischungen davon enthält.

## Claims

1. A method for manufacturing a composite material, wherein the composite material comprises polymer-based nanocomposites, with the following method steps:
a.) providing a starting mixture with at least one polymer and at least one filler, in particular at least a nanoscopic filler, wherein
i.) the starting mixture is provided by mixing at least one polymer, dissolved in a polymer solvent, and at least one filler, dissolved in a filler solvent, as educts, wherein the mixing process is carried out by stirring and/or by applying ultrasound, so that, a starting mixture, solved in a liquid, is provided as starting mixture, or
ii.) the starting mixture is provided as dry starting mixture by mixing at least one solid polymer and at least one solid filler, wherein the mixing process is carried out by stirring and/or by applying ultrasound and/or under use of a milling device, so that a dry starting mixture is provided as starting mixture,
b.) supplying the starting mixture from method step a.) to a calender, so that the starting mixture is calendered by the calender and an intermediate product is obtained with a polymer matrix with filler material, preferably nanoscopic filler material, homogeneously distributed in it, and
c.) processing the intermediate product from method step b.) to a composite material under using a casting process of solutions and/or under using a forming process and/or under using an extrusion process and/or under using a spinning process.

2. Method according to claim 1, **characterised in that** the starting mixture is subjected to ultrasound before supplying to the calender.

3. Method according to claim 1 or 2, **characterised in that** as polymer solvent or as filler solvent or as solvent a polar solvent and/or a non-polar solvent or solvent systems in the form of acids, in particular strong acids, or a mixture thereof are used.

4. Method according to one of the claims 1 to 3, **characterised in that** the providing of the starting mixture takes place at a temperature of 1°C to 300°C, in particular between 10°C and 200°C or in particular between 20°C and 150°C.

5. Method according to one of the claims 1 to 4, **characterised in that** the concentration of the filler in the starting mixture or the concentration of the filler in the filler solvent or the concentration of the filler in the solvent is higher than 0 weight % (> zero) and less than/equal (≤) 50 weight %, in particular between 0 weight % and 20 weight % or between 0.0001 weight % and 15 weight %.

6. Method according to one of the claims 1 to 5, **characterised in that** the calendering in the method step b.) is carried out at a temperature of 10°C to 500°C, in particular between 15°C and 400°C or in particular between 20°C and 350°C, and/or that the calendering is carried out within a time frame of 1 second to 2, in particular within a time frame of 5 seconds to 1 hour or in particular within a time frame of 5 seconds to 30 minutes.

7. Method according to one of the claims 1 to 6, **characterised in that** after carrying out method step b.) the intermediate product is dissolved in a solvent before further processing, wherein in particular the repeated dissolving of the intermediate product is carried out at a temperature of 1 °C to 300°C, in particular between 10°C and 200°C or in particular between 20°C and 150°C, and/or that the intermediate product is dissolved in a solvent for carrying out the spinning process, wherein in particular as solvent a polar solvent or an non-polar solvent or solvent systems in the form of acids, in particular strong acids, or a mixture thereof are used.

8. Method according to one of the claims 1 to 7, **characterised in that** the filler consist of, in particular modified or unmodified, carbon black (CB) and/or carbon nanofibers and/or carbon nanotubes and/or fullerene and/or amorphous carbon and/or zeolite and/or graphene and/or molecular sieve carbon and/or graphite and/or pyrolysed polymer particles and/or aluminium oxide and/or zinc oxide and/or silicon dioxide and/or silicates and/or polymer fibres and/or glass fibres and/or calcium carbonate powders and/or barium sulphate and/or kaolin and/or titanium dioxide and/or iron oxide and/or organic resins and/or natural mineral fillers and/or synthetic mineral fillers and/or clays and/or aluminium silicate and/or hectorite and/or montmorillonite and/or bentonite and/or beidellite and/or saponite and/or stevensite and/or sauconit and/or nontronite and/or gold and/or hydrous metal hydroxides and/or smectites and/or vermiculites and/or mica and/or aluminium oxide and/or aluminium nitride and/or buckyballs and/or copper and/or copper oxide and/or ion and/or iron-cobalt alloy and/or iron-nickel alloy and/or magnesium and/or magnesium oxide and/or magnetic nanoparticles and/or magnetic nanostructures and/or magnetite and/or nanodots and/or nanobelts and/or nanocrystals and/or lubricant nano powder and/or nanorods and/or nano sanding sponges and/or nickel nioboxide and/or quantum dots and/or silver and/or titanium dioxide and/or titanium and/or tungsten and/or vanadiumoxid and/or semiconductor nanoparticles and/or zirconium and/or zirconium oxide and/or zirconium silicate and/or mixtures thereof.

9. Method according to one of the claims 1 to 8, **characterised in that** the starting mixture contains additionally processing auxiliaries and/or crosslinking agents and/or softeners and/or expanding agents and/or lubricants and/or surface-active agents and/or consistency improver and/or dyes and/or pigments and/or mica and/or flame retardant material and/or stabilisators and/or adhesion promoter and/or mixtures thereof.

10. Method according to one of the claims 1 to 9, **characterised in that** the polymer contains polyketones and/or polyether ketones. and/or polyethylene and/or polypropylene and/or polyimides and/or polymers selected from the product family of IMITEC and/or polyarylene ether and/or polysulfones and/or polyamides and/or polyester and/or polystyrenes and/or acrylonitrile-butadiene-styrene (ABS) and/or polyacrylic and/or celluloid and/or cellulose acetate and/or ethylene vinyl acetate (EVA) and/or ethylene vinyl alcohol (EVAL) and/or polytetrafluoroethylene (PTFE) and/or fluorinated ethylene propylenes (FEP) and/or perfluoroalkoxy (PFA) and/or chlorotrifluoroethylene (CTFE) and/or ethylene-trifluoroethylenes (ECTFE) and/or polyethylene-tetrafluoroethylenes (ETFE) and/or ionomers and/or liquid crystal polymer (LCP) and/or polyoxymethylenes (POM) and/or polyacrylonitrile (PAN) and/or polyamideimides (PAI) and/or polyaryl etherketone (PAEK) and/or polybutadiene (PBO) and/or polybutylene and/or polybutylene terephthalate (PBT) and/or polyethylene terephthalate (PET) and/or polycyclohexylenedimethylene terephthalate (PCT) and/or polycarbonate and/or polyhydroxyalkanoates (PHA) and/or polyester and/or polyetherimides (PEI) and/or polysulfones and/or polyethersulfone and/or chlorinated polyethylene (CPE or polyethylene chlorinates (PEC)) and/or polylactic acid and/or polymethylpentene and/or polyphenylene oxide and/or polyazoles and/or polyphenylene sulfide (PPS) and/or polyphthalamide (PPA) and/or polyvinyl chloride (PVC) and/or polyvinylidene chloride (PVCD) and/or mixtures thereof.

## Revendications

1. Procédé de préparation d'un matériau composite, le matériau composite comportant des nanocomposants à base de polymère, comportant les étapes de procédé suivantes :
a.) mise à disposition d'un mélange de départ en au moins un polymère et au moins une charge, en particulier au moins une charge nanoscopique, lors de laquelle
i.) le mélange de départ est mis à disposition comme composé de départ par mélangeage d'au moins un polymère dissous dans un solvant à polymères et d'au moins une charge dissoute dans un solvant à charge, le processus de mélangeage s'effectuant par agitation et/ou par exposition à des ultrasons, de telle sorte que comme mélange de départ se retrouve un mélange de départ dissous dans un liquide, ou
ii.) le mélange de départ est mis à disposition par mélangeage d'un polymère au moins solide et d'au moins une charge solide comme mélange de départ sec, le processus de mélangeage s'effectuant par agitation et/ou par exposition à des ultrasons et/ou moyennant l'utilisation d'un dispositif de broyage, de telle sorte qu'un mélange de départ sec est mis à disposition comme mélange de départ,
b.) amenée du mélange de départ provenant de l'étape de procédé a.) à une calandreuse, de telle sorte que le mélange de départ soit calandré par la calandreuse et qu'un produit intermédiaire soit obtenu comportant une matrice de polymère contenant la charge, de préférence une charge nanoscopique, dispersée de façon homogène, et
c.) transformation du produit intermédiaire provenant de l'étape de procédé b.) moyennant l'utilisation d'un procédé de coulée de solutions et/ou moyennant l'utilisation d'un procédé de moulage et/ou moyennant l'utilisation d'un procédé d'extrusion et/ou moyennant l'utilisation d'un procédé de filage, pour donner un matériau composite.

2. Procédé selon la revendication 1, **caractérisé en ce qu'**avant l'amenée à la calandreuse, le mélange de départ est exposé à des ultrasons.

3. Procédé selon la revendication 1 ou la revendication 2, **caractérisé en ce que** comme solvant de polymère ou comme solvant de charge est utilisé un solvant polaire et/ou un solvant non polaire ou des systèmes de solvants sous la forme d'acides, en particulier d'acides forts, ou un mélange de ceux-ci.

4. Procédé selon l'une quelconque des revendications 1 à 3, **caractérisé en ce que** la mise à disposition du mélange de départ s'effectue à une température de 1 °C à 300 °C, en particulier entre 10 °C et 200 °C, ou en particulier entre 20 °C et 150 °C.

5. Procédé selon l'une quelconque des revendications 1 à 4, **caractérisé en ce que** la concentration de la charge dans le mélange de départ ou la concentration de la charge dans le solvant de charge ou la concentration de la charge dans le solvant est supérieure à 0 % en poids (> zéro) et inférieure ou égale (≤) à 50 % en poids, en particulier comprise entre 0 % en poids et 20 % en poids ou entre 0,0001 % en poids et 15 % en poids.

6. Procédé selon l'une quelconque des revendications 1 à 5, **caractérisé en ce que** le traitement par la calandreuse dans l'étape b.) du procédé est effectué à une température de 10 °C à 500 °C, en particulier entre 15 °C et 400 °C et en particulier entre 20 °C et 350 °C, et/ou que le traitement par la calandreuse est effectué dans une plage de temps de 1 seconde à 2 heures, en particulier dans une plage de temps de 5 secondes à 1 heure, ou en particulier dans une plage de temps de 5 secondes à 30 minutes.

7. Procédé selon l'une quelconque des revendications 1 à 6, **caractérisé en ce qu'**après l'exécution de l'étape de procédé b.), le produit intermédiaire est dissous dans un solvant avant la poursuite de son traitement, la nouvelle dissolution du produit intermédiaire s'effectuant en particulier à une température de 1 °C à 300 °C, en particulier entre 10 °C et 200 °C ou en particulier entre 20 °C et 150 °C, et/ou **en ce que** le produit intermédiaire est dissous dans un solvant pour l'exécution du processus de filage, un solvant polaire ou un solvant non polaire ou des systèmes de solvants sous la forme d'acides, en particulier d'acides forts, ou un mélange de ceux-ci étant utilisés.

8. Procédé selon l'une quelconque des revendications 1 à 7, **caractérisé en ce que** la charge consiste en noir de carbone (CB), en particulier modifié ou non modifié, et/ou en nanofibres de carbone et/ou en nanotubes de carbone et/ou en fullerènes et/ou en carbone amorphe et/ou en zéolithe et/ou en graphène et/ou en tamis moléculaire de carbone et/ou en graphite et/ou en particules de polymère pyrolysées et/ou en oxyde d'aluminium et/ou en oxyde de zinc et/ou en dioxyde de silicium et/ou en silicates et/ou en fibres de polymère et/ou en fibres de verre et/ou en poudre de carbonate de calcium et/ou en sulfate de baryum et/ou en kaolin et/ou en dioxyde de titane et/ou en oxyde de fer et/ou en résines organiques et/ou en charges minérales naturelles et/ou en charges minérales synthétiques et/ou en argiles et/ou en silicate d'aluminium et/ou en hectorite et/ou en montmorillonite et/ou en bentonite et/ou en beidellite et/ou en saponite et/ou en stevensite et/ou en sauconite et/ou en nontronite et/ou en or et/ou en hydroxydes métalliques hydratés et/ou en smectites et/ou en vermiculites et/ou en mica et/ou en oxyde d'aluminium et/ou en nitrure d'aluminium et/ou en buckyballs et/ou en cuivre et/ou en oxyde de cuivre et/ou en alliage fer-cobalt et/ou en alliage fer-nickel et/ou en magnésium et/ou en oxyde de magnésium et/ou en nanoparticules magnétiques et/ou en nanostructures magnétiques et/ou en magnétite et/ou en nanodots et/ou en nanobelts et/ou en nanocristaux et/ou en nanoéponges abrasives et/ou en oxyde de nickel et de niobium et/ou en boîtes quantiques et/ou en argent et/ou en oxyde de titane et/ou en titane et/ou en tungstène et/ou en oxyde de vanadium et/ou en nanoparticules de semi-conducteur et/ou en zirconium et/ou en oxyde de zirconium et/ou en silicate de zirconium et/ou en mélanges de ceux-ci.
